# FASCICULE DE BREVET EUROPEEN

(11) **EP 1 005 127 B1**
(45) Date de publication et mention de la délivrance du brevet: **04.06.2008**
(21) Numéro de dépôt: 99402908.0
(22) Date de dépôt: 23.11.1999
(51) Int. Cl.: H02G 3/10

(54) **Support pour appareillage à disposer le long d'une goulotte avec auvent en plusieurs parties**
Geräteträgereinrichtung seitlich anzubringen an einem Kabelkanal mit mehrteiliger Abdeckung
Holder for apparatus to be fastened alongside a channel with multipiece cover

(30) Priorité: 27.11.1998 FR 9814941
(43) Date de publication de la demande: 31.05.2000
(73) Titulaire: LEGRAND, 87000 Limoges (FR); LEGRAND SNC, 87000 Limoges (FR)
(72) Inventeur: Decore, Raphaël, 72140 Parennes (FR); Piole, David, 72430 Avoise (FR)
(74) Mandataire: Santarelli

(56) Documents cités:
- EP-A- 0 159 554
- EP-A- 0 239 456
- EP-A- 0 267 079

## Description

La présente invention concerne d'une manière générale les supports pour appareillage à disposer le long d'une goulotte intervenant elle-même en saillie sur une quelconque paroi, cette goulotte courant par exemple en plinthe à la base de cette paroi, et elle vise plus particulièrement, mais non nécessairement exclusivement, le cas où la goulotte, alors plus communément appelée "moulure", a des dimensions, et, notamment, une largeur, le plus souvent appelée hauteur, relativement faibles.

Ainsi qu'on le sait, la goulotte sert au logement et à la protection des conducteurs ou autres canalisations nécessaires à la desserte de l'appareillage concerné, et il convient d'organiser le passage de ces conducteurs ou de ces canalisations de cette goulotte au support correspondant tout en continuant à assurer leur protection.

Pour ce faire, les supports usuellement mis en oeuvre comportent, globalement, d'une part, un corps, qui, destiné à être rapporté sur la paroi à équiper, est apte à former un boîtier pour l'appareillage concerné, et qui, le long de celui de ses côtés par lequel il doit côtoyer la goulotte, présente une ouverture, et, d'autre part, un auvent, parfois appelé "tiroir", qui, s'étendant à compter du corps, en correspondance avec l'ouverture de celui-ci, est destiné à recouvrir localement la goulotte, en s'étendant en pratique transversalement par rapport à celle-ci.

L'un des problèmes, en l'espèce, tient à ce que les goulottes susceptibles d'être mises en oeuvre peuvent avoir des largeurs ou hauteurs différentes.

Dans le brevet européen No 0 159 554, l'auvent est d'un seul tenant avec le corps, et, suivant la largeur ou hauteur de la goulotte, il est mis en oeuvre, entre ce corps et cette goulotte, des cales amovibles.

Outre que cette disposition n'est pas très favorable du point de vue de l'esthétique, elle se trouve difficilement applicable lorsque la gamme de largeurs ou hauteurs envisageables pour les goulottes susceptibles d'être mises en oeuvre est relativement grande.

En effet, le corps du support, et donc l'appareillage porté par celui-ci, se trouvent alors très éloignés de la goulotte lorsque celle-ci est de petite largeur ou hauteur, ce qui n'est pas non plus très favorable du point de vue de l'esthétique.

Dans le brevet européen No 0 239 456, l'auvent forme une pièce distincte du corps du support, et il est monté réglable en position par rapport à celui-ci, ce qui permet d'ajuster sa position en fonction de la largeur ou hauteur de la goulotte.

Bien que cette disposition ait donné, et puisse encore donner, satisfaction, notamment du point de vue de l'esthétique, elle présente cependant l'inconvénient d'imposer en pratique à l'installateur une découpe de l'auvent, pour éliminer de celui-ci la partie qui, autrement, en serait en surplus à l'intérieur du corps.

La présente invention a d'une manière générale pour objet une disposition permettant d'éviter ces inconvénients.

De manière plus précise, elle a pour objet un support pour appareillage à disposer le long d'une goulotte intervenant en saillie sur une quelconque paroi, ce support étant du genre comportant, d'une part, un corps, qui, destiné à être rapporté sur cette paroi, est apte à former un boîtier pour l'appareillage concerné, et qui, le long de celui de ses côtés par lequel il doit côtoyer la goulotte, présente une ouverture, et, d'autre part, un auvent, qui, s'étendant à compter du corps, en correspondance avec l'ouverture de celui-ci, est destiné à recouvrir localement la goulotte, et étant d'une manière générale caractérisé en ce que l'auvent est formé d'au moins deux parties distinctes, qui, échelonnées en longueur sur la largeur de la goulotte, interviennent bout à bout l'une par rapport à l'autre, en se joignant l'une l'autre suivant une surface de jonction sensiblement parallèle à l'ouverture du corps.

Ainsi, suivant la largeur ou hauteur de la goulotte, il suffit d'insérer, entre ces deux parties, qui forment dès lors les parties d'extrémité de l'auvent, une ou plusieurs parties intermédiaires formant chacune une rallonge.

Il en résulte une grande souplesse de mise en oeuvre, tout en sauvegardant l'esthétique.

Les caractéristiques et avantages de l'invention ressortiront d'ailleurs de la description qui va suivre, à titre d'exemple, en référence aux dessins schématiques annexés sur lesquels :
la figure 1 est, à échelle volontairement réduite, une vue en perspective d'un support suivant l'invention, représenté en place le long d'une goulotte ;
la figure 2 est, à échelle supérieure, une vue en perspective éclatée de cette goulotte et d'une partie du support suivant l'invention ;
la figure 3 est une vue en perspective éclatée de la partie restante du support suivant l'invention ;
la figure 4 reprend, à échelle supérieure, le détail de la figure 3 repéré par un encart IV sur cette figure 3 ;
la figure 5 est une vue en perspective d'une des parties constitutives de l'auvent que comporte le support suivant l'invention, vue de l'intérieur ;
la figure 6 est, à échelle supérieure, une vue partielle en coupe de cette partie de cet auvent, suivant la ligne VI-VI de la figure 5 ;
la figure 7 est, à l'échelle de la figure 5, et suivant la même orientation que celle-ci, une vue en perspective d'une autre partie participant éventuellement à la constitution de l'auvent du support suivant l'invention ;
la figure 8 est, à échelle supérieure, une vue partielle en coupe de cette autre partie, suivant la ligne VIII-VIII de la figure 7 ;
la figure 9 est, à l'échelle de la figure 5, et suivant la même orientation que celle-ci, une vue en perspective d'une autre partie de l'auvent du support suivant l'invention ;
la figure 10 est, à échelle supérieure, une vue partielle en perspective illustrant l'assemblage de deux des parties constitutives de l'auvent du support suivant l'invention ;
la figure 11 est une vue en perspective d'un élément de positionnement que comporte intérieurement le support suivant l'invention, vu de dessous ;
la figure 12 est, à échelle supérieure, une vue de la goulotte et de cet élément de positionnement, en coupe transversale partielle pour la goulotte, et de bout pour l'élément de positionnement ;
la figure 13 est, à la manière de la figure 12, une vue de la goulotte et d'une partie de l'auvent du support suivant l'invention, en coupe transversale pour la goulotte et de bout pour cette partie de cet auvent ;
la figure 14 est, à échelle réduite, une vue en perspective de l'auvent du support suivant l'invention, pour une première configuration possible pour cet auvent ;
la figure 15 est une vue en perspective qui, analogue à celle de la figure 14, illustre un développement possible pour la mise en oeuvre de cet auvent ;
la figure 16 est une vue en perspective qui, elle aussi analogue à celle de la figure 14, se rapporte à une autre configuration possible pour l'auvent du support suivant l'invention.

De manière connue en soi, le support 10 suivant l'invention est destiné à servir de logement à un quelconque appareillage, et, par exemple, à un appareillage électrique.

Plus précisément, dans la forme de mise en oeuvre représentée, il a été supposé, à titre d'exemple, qu'il servait de logement à un interrupteur électrique.

Un tel interrupteur électrique ne relevant pas de la présente invention, il n'a pas été représenté en totalité sur les figures, et il ne sera pas décrit ici.

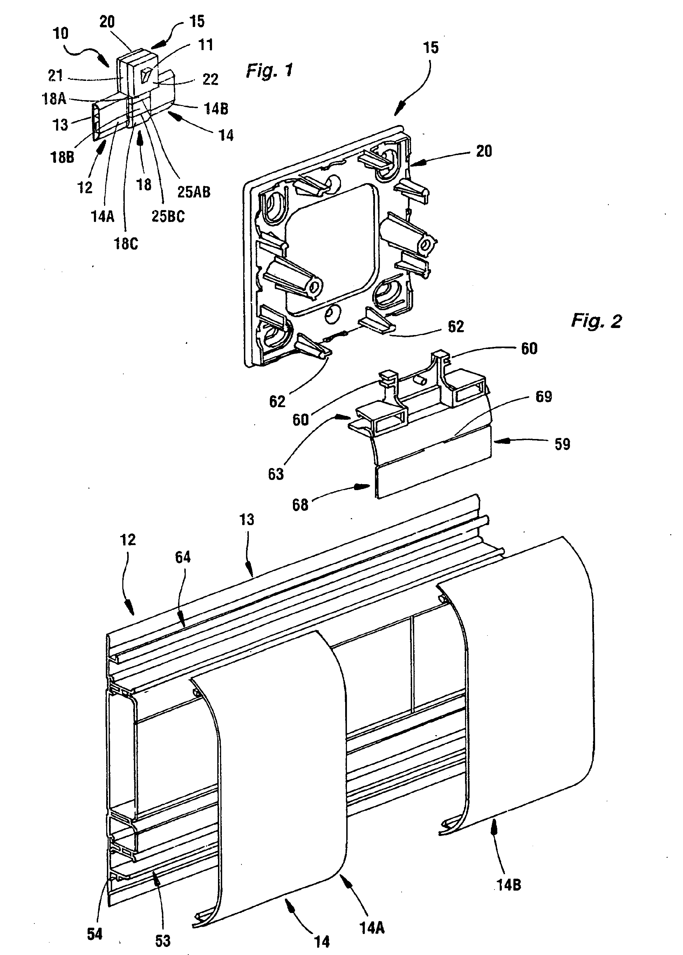

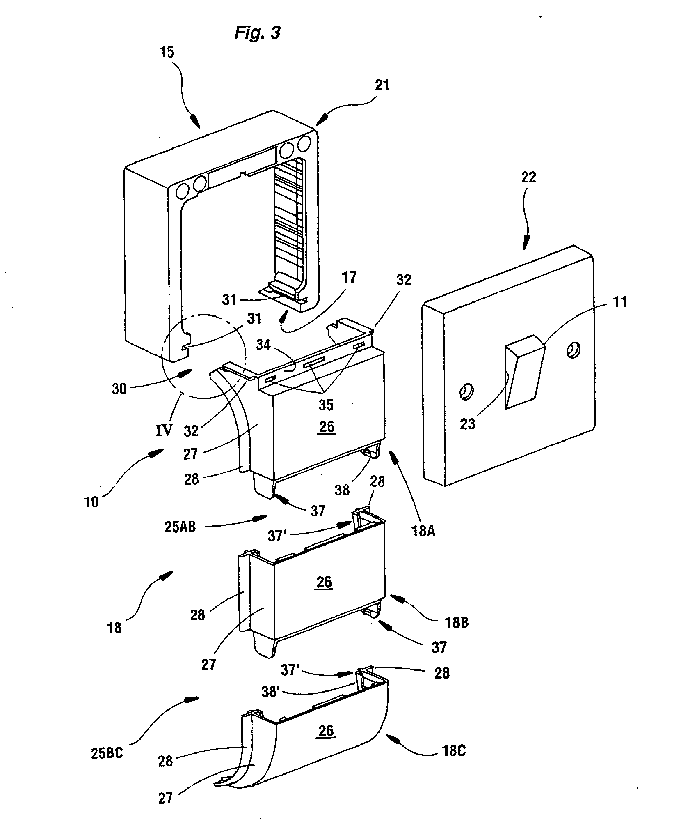

Seule apparaît, en façade, sur les figures 1 et 3, la touche 11 propre à sa commande.

De manière connue en soi, également, le support 10 suivant l'invention est destiné à être disposé le long d'une goulotte 12, qui intervient en saillie sur une quelconque paroi, non représentée, et qui est apte à servir de logement à des canalisations ou à des conducteurs électriques également non représentés.

Cette goulotte 12 ne relevant pas non plus de la présente invention, elle ne sera pas non plus décrite en détail ici.

Il suffira d'indiquer qu'elle comporte, globalement, un socle 13, par lequel elle est adaptée à être rapportée sur la paroi à équiper, et un couvercle 14, qui est adapté à être rapporté sur ce socle 13, par exemple par encliquetage.

De manière connue en soi, enfin, le support 10 suivant l'invention comporte, globalement, d'une part, un corps 15, qui, destiné à être rapporté sur la paroi à équiper, est apte à former un boîtier pour l'appareillage concerné, et qui, le long de celui de ses côtés par lequel il doit côtoyer la goulotte 12, présente une ouverture 17, et, d'autre part, un auvent 18, qui, s'étendant à compter du corps 15, en correspondance avec l'ouverture 17 de celui-ci, est destiné à recouvrir localement la goulotte 12.

Plus précisément, cet auvent 18 s'étend transversalement par rapport au socle 13 de cette goulotte 12, en substitution au couvercle 14, c'est-à-dire entre deux tronçons successifs 14A, 14B de celui-ci.

Pour l'essentiel, le corps 15 du support 10 suivant l'invention ne relève pas, lui non plus, de la présente invention, et il ne sera donc pas décrit dans tous ses détails ici.

Seuls en seront décrits ici les éléments nécessaires à la compréhension de l'invention.

Dans la forme de réalisation représentée, ce corps 15 est globalement parallélépipédique, et il comporte, successivement, une platine 20, figures 1 et 2, par laquelle il est adapté à être assujetti à la paroi à équiper, un capot 21, figures 1 et 3, qui comporte son ouverture 17, et qui, pour le reste, est en forme générale de cadre, et une plaque de façade 22, figures 1 et 3, qui forme couvercle, mais qui, pour le passage de la touche 11, présente une ouverture centrale 23.

Suivant l'invention, et ainsi qu'il est mieux visible sur la figure 3, l'auvent 18 du support 10 suivant l'invention est formé d'au moins deux parties 18A, 18B, 18C distinctes, qui, échelonnées en longueur sur la largeur de la goulotte 12, et, plus précisément, sur la largeur du socle 13 de celle-ci, interviennent bout à bout l'une par rapport à l'autre, en se joignant l'une l'autre suivant une surface de jonction 25AB, 25BC sensiblement parallèle à l'ouverture 17 du corps 15.

Par exemple, et tel que représenté sur les figures 1 à 15, l'auvent 18 est formé d'au moins trois parties 18A, 18B, 18C, à savoir deux parties d'extrémité 18A, 18C et au moins une partie intermédiaire 18B formant rallonge.

Globalement, ces parties 18A, 18B, 18C de l'auvent 18 ont chacune, en section transversale, un profil en U, avec une portion médiane 26 et deux ailes latérales 27.

Dans les formes de réalisation représentées, la portion médiane 26 est sensiblement plane, tant pour la partie 18A la plus proche du corps 15, que pour la partie intermédiaire 18B.

En revanche, pour la partie 18C la plus éloignée du corps 15, elle est globalement cintrée, à l'image du couvercle 14.

Dans les formes de réalisation représentées, les ailes latérales 27 s'étendent sensiblement perpendiculairement à la portion médiane 26.

Pour la partie intermédiaire 18B, ces ailes latérales 27 ont un contour sensiblement rectangulaire.

En revanche, pour les parties d'extrémité 18A, 18C, leur contour est adapté au profil du couvercle 14.

Dans les formes de réalisation représentées, il est prévu, le long du bord libre de chacune de ces ailes latérales 27, et suivant, donc, le profil particulier à chacune des parties 18A, 18B, 18C, un rebord 28, qui, à la manière d'une visière, fait saillie vers l'extérieur, perpendiculairement à ces ailes latérales 27.

Dans les formes de réalisation représentées, la partie 18A de l'auvent 18 la plus proche du corps 15 forme une pièce distincte de celui-ci.

Préférentiellement, et cela est le cas dans ces formes de réalisation, entre le corps 15 du support 10 et cette partie 18A de l'auvent 18 interviennent des moyens de positionnement 30.

Par exemple, et tel que représenté, ces moyens de positionnement 30 comportent, sur le corps 15, et, plus précisément, sur le capot 21 que comporte celui-ci, deux rainures 31, qui longent, chacune respectivement, les deux bords latéraux de son ouverture 17, en se faisant face l'une l'autre, et, en correspondance, sur la partie 18A concernée de l'auvent 18, deux nervures 32, par lesquelles cette partie 18A est en prise avec les rainures 31 du corps 15.

En pratique, dans les formes de réalisation représentées, les nervures 32 font saillie, en équerre, dos à dos, sur les bords transversaux correspondants des ailes latérales 27 de la partie 18A de l'auvent 18, sur toute la hauteur de ceux-ci.

Pour des raisons qui apparaîtront ci-après, la portion médiane 26 de cette partie 18A forme, en décrochement, le long de son bord libre correspondant, une banquette 34 ajourée de place en place par des évidements 35.

Préférentiellement, et cela est le cas dans les formes de réalisation représentées, sur les deux parties d'extrémité 18A, 18C de l'auvent 18 sont prévus des moyens d'assemblage 37, 37' complémentaires, ces moyens d'assemblage 37, 37' étant d'un premier type, 37, sur l'une de ces parties d'extrémité 18A, 18C, en l'espèce la partie d'extrémité 18A la plus proche du corps 15, et d'un deuxième type, 37', sur l'autre de celles-ci, et, donc, en l'espèce, la partie d'extrémité 18C la plus éloignée du corps 15.

Conjointement, la partie intermédiaire 18B comporte, d'un côté, en l'espèce du côté de la partie d'extrémité 18C la plus éloignée du corps 15, des moyens d'assemblage du premier type 37, et, de l'autre côté, et, donc, du côté de la partie d'extrémité 18A la plus proche du corps 15, des moyens d'assemblage du deuxième type 37'.

Dans les formes de réalisation représentées, les moyens d'assemblage 37, 37' interviennent sensiblement parallèlement à l'épaisseur des parties 18A, 18B, 18C concernées de l'auvent 18, et, plus précisément, sensiblement parallèlement à l'épaisseur de leur ailes latérales 27.

Par exemple, les moyens d'assemblage du premier type 37 comportent au moins un élément d'emboîtement mâle 38, et les moyens d'assemblage du deuxième type 37' comportent, en correspondance, au moins un élément d'emboîtement femelle 38' complémentaire de l'élément d'emboîtement mâle 38 précédent.

En pratique, les moyens d'assemblage du premier type 37 comportent deux éléments d'emboîtement mâles 38, à raison d'un par aile latérale 27 des parties 1 8A, 18B de l'auvent 18.

Corollairement, les moyens d'assemblage du deuxième type 37' comportent deux éléments d'emboîtement femelles 38', à raison d'un par aile latérale 27 des parties 18B, 18C de l'auvent 18.

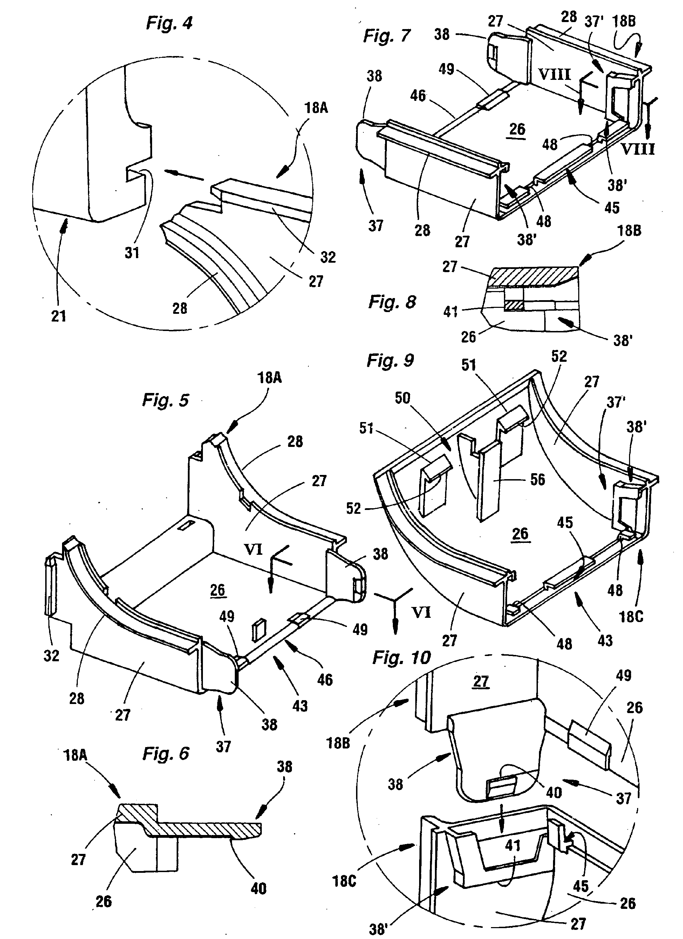

Ainsi qu'il est mieux visible sur les figures 6 et 10, un élément d'emboîtement mâle 38 se présente sous la forme d'une patte élastiquement déformable, dotée d'un cran d'encliquetage 40 au voisinage de son extrémité libre.

Corollairement, et ainsi qu'il est mieux visibles sur les figures 8 et 10, un élément d'emboîtement femelle 38' se présente sous la forme générale d'une poche sans fond, dont le bord libre 41 forme un cran d'encliquetage sur lequel vient se crocheter le cran d'encliquetage 40 de l'élément d'emboîtement mâle 38 correspondant.

Préférentiellement, et cela est le cas dans les formes de réalisation représentées, deux au moins des parties 18A, 18B, 18C de l'auvent 18 à abouter l'une à l'autre comportent, sur une portion au moins du contour de la surface de jonction 25AB, 25BC correspondante, des moyens d'engagement 43.

Par exemple, et tel que représenté, ces moyens d'engagement 43 comportent, sur l'une des parties 18A, 18B, 18C concernées, une feuillure 45, et, sur l'autre de ces parties 18A, 18B, 18C, une languette 46 par laquelle celle-ci est en prise avec la feuillure 45 de la partie 18A, 18B, 18C précédente.

Dans les formes de réalisation représentées, la languette 46 est directement formée par la tranche correspondante de la partie 18A, 18B, 18C concernée.

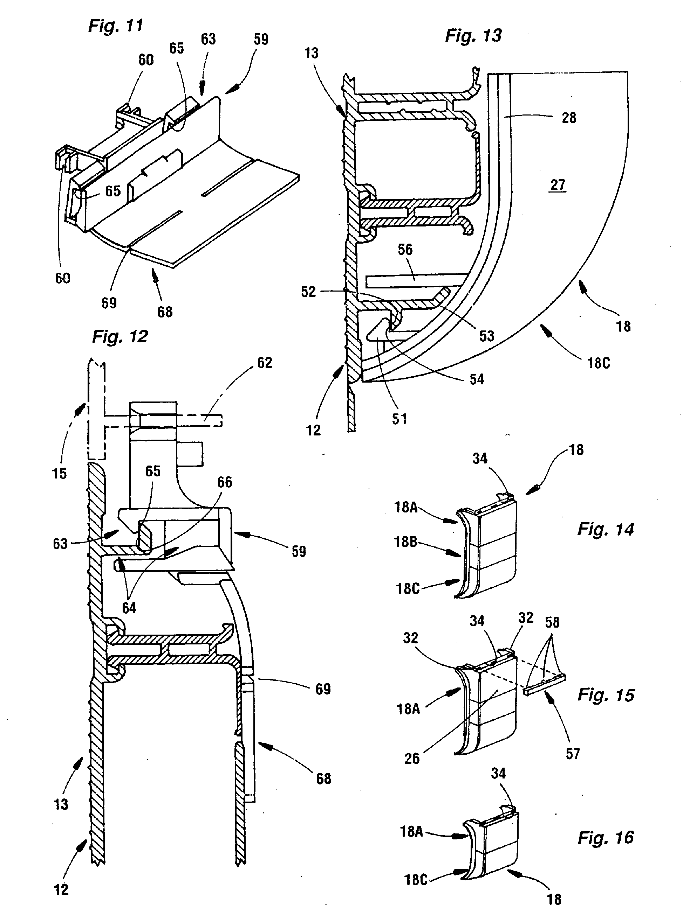

En fait, une telle languette 46 n'est prévue que sur les parties 18A, 18B dans les formes de réalisation représentées sur les figures 1 à 15, et que sur la seule partie 18A dans la forme de réalisation représentée sur la figure 15.

Plus précisément, dans ces formes de réalisation, cette languette 46 est formée par la tranche correspondante de la portion médiane 26 de ces parties 18A, 18B, en s'étendant de l'un à l'autre des deux éléments d'emboîtement mâles 38 ou femelles 38' associés.

En pratique, dans les formes de réalisation représentées, la partie d'extrémité 18A de l'auvent 18 forme une languette 46 du côté de la partie intermédiaire 18B, cette partie intermédiaire 18B forme une feuillure 45 du côté de la partie d'extrémité 18A et une languette 46 du côté de la partie d'extrémité 18C, et cette partie d'extrémité 18C forme une feuillure 45 du côté de la partie intermédiaire 18B.

Dans les formes de réalisation représentées, chaque languette 46 porte, localement, en saillie, pour des raisons de moulage qui n'ont pas à être explicitées ici, au moins un bossage 49, et, en correspondance, chaque feuillure 45 est au moins localement interrompue par une encoche 48 de même largeur que le bossage 49 précédent, pour emboîtement sur celui-ci.

Par exemple, et tel que représenté, chaque languette 46 porte, localement, en saillie, à distance l'un de l'autre, deux bossages 49, et, en correspondance, chaque feuillure 45 est localement interrompue par deux encoches 48.

Dans la forme de réalisation représentée, les encoches 48 et les bossages 49 ont des longueurs différentes d'une partie 18A, 18B, 18C à l'autre.

Il résulte de ce qui précède que, dans les formes de réalisation représentées, les moyens d'assemblage 37, 37' alternent avec les moyens d'engagement 43, ces moyens d'assemblage 37, 37', ou, plus précisément, les éléments d'emboîtement mâles 38 ou femelles 38' qui les constituent, s'étendant le long des ailes latérales 27 des parties 18A, 18B concernées de l'auvent 18, et les moyens d'engagement 43, ou, plus précisément, la feuillure 45 ou la languette 46 qui les constitue, s'étendant, eux, le long de leur portion médiane 26.

Il résulte, également, de ce qui précède que, dans les formes de réalisation représentées, les parties 18A, 18B, 18C de l'auvent 18 ne comportent des moyens d'engagement que sur une portion du contour de la surface de jonction 25AB, 25BC correspondante, en l'espèce celle correspondant à la tranche de leur portion médiane 26.

Dans les formes de réalisation représentées, la partie 18C de l'auvent 18 la plus éloignée du corps 15 comporte, en saillie, sur sa surface inférieure, et, plus précisément, sur la surface inférieure de sa portion médiane 26, des moyens d'encliquetage 50 par lesquels elle est apte à se crocheter sur le socle 13 de la goulotte 12 concernée.

Par exemple, et tel que représenté, ces moyens d'encliquetage 50 comportent deux pattes élastiquement déformables 51 qui, établies à distance l'une de l'autre, comportent chacune un cran d'encliquetage 52, le socle 13 de la goulotte 12 comportant, en correspondance, sur une nervure 53, un cran d'encliquetage 54.

Dans la forme de réalisation représentée, il est associé, aux pattes élastiquement déformables 51, à distance de ces pattes élastiquement déformables 51, et parallèlement à celles-ci, un flasque 56, qui, à la manière d'une butée, est destiné à venir se situer de l'autre côté de la nervure 53 du socle 13 de la goulotte 12 par rapport aux pattes élastiquement déformables 51, figure 13.

Dans les formes de réalisation représentées, et pour des raisons qui apparaîtront ci-après, à la partie 18A de l'auvent 18 la plus proche du corps 15, est associée une barrette 57, figure 15, apte à se superposer à cette partie d'extrémité 18A, et, plus précisément, à la banquette 34 formée par sa portion médiane 26, entre les nervures 32 de celle-ci.

Pour son emboîtement sur la partie d'extrémité 18A, cette barrette 57 comporte, en saillie, de place en place, des pions 58 propres à son emboîtement dans les évidements 35 de cette partie d'extrémité 18A.

Dans les formes de réalisation représentées, au corps 15 est associé un élément de positionnement 59 apte à venir en prise, d'une part, avec ce corps 15, et, d'autre part, avec le socle 13 de la goulotte 12 concernée.

Par exemple, et tel que représenté, cet élément de positionnement 59 comporte, d'une part, deux rainures 60, qui sont tournées dos à dos, et par lesquelles il est apte à venir en prise avec deux nervures 62 prévues à cet effet en saillie sur la platine 20 du corps 15, et, d'autre part, une rainure 63, dont l'orientation est globalement orthogonale à celle des rainures 60 précédentes, et par laquelle il est apte à venir en prise avec une nervure 64 également prévue à cet effet en saillie sur le socle 13 de la goulotte 12.

Préférentiellement, et cela est le cas dans la forme de réalisation représentée, l'un des flancs de la rainure 63 comporte un cran d'encliquetage 65, pour son crochetage sur un cran d'encliquetage 66 de la nervure 64 du socle 13 de la goulotte 12.

Dans la forme de réalisation représentée, l'élément de positionnement 59 est équipé, d'un seul tenant, d'un voile 68, apte à former un séparateur dans la goulotte 12 concernée entre le socle 13 de celle-ci et son couvercle 14.

Par exemple, et tel que représenté, ce voile 68 présente, localement, au moins une zone de moindre résistance 69, qui permet d'en réduire la longueur si désiré.

Lors de l'installation du support 10 suivant l'invention, il est d'abord procédé à la mise en place de sa platine 20.

L'élément de positionnement 59 permet avantageusement de situer de manière convenable cette platine 20 par rapport au socle 13 de la goulotte 12.

Il sert également avantageusement de repère pour le tronçonnage du couvercle 14 nécessaire à l'implantation de l'auvent 18.

Le capot 21 est ensuite emboîté sur la platine 20.

Une fois le câblage de l'appareillage électrique concerné effectué, l'auvent 18, qui a été préalablement assemblé, est à son tour amené en prise avec le capot 21, par les moyens de positionnement 30 prévus à cet effet entre sa partie d'extrémité 18A et ce capot 21.

En venant porter sur la banquette 34 de cette partie d'extrémité 18A, le mécanisme de l'appareillage concerné vient, lorsqu'il est lui-même mis en place dans le capot 21, conforter la position de l'auvent 18 par rapport à ce capot 21, en l'empêchant de s'extraire de ce capot 21, et, donc, en assurant sa retenue par rapport à ce dernier.

Ainsi qu'il est aisé de le comprendre, la barrette 57 est éventuellement mise en oeuvre pour compenser une possible différence de dimensions entre le mécanisme de l'appareillage concerné et le capot 21.

Quoi qu'il en soit, la partie d'extrémité 18C de l'auvent 18 la plus éloignée du corps 15 vient, elle, conjointement, s'encliqueter sur le socle 13 de la goulotte 12, au bénéfice, également, de la retenue de l'ensemble de cet auvent 18.

Dans ce qui précède, il a été supposé que, avec ses trois parties 18A, 18B, 18C, l'auvent 18 correspondait, en longueur, à la largeur de la goulotte 12.

Mais, pour une goulotte de largeur moindre, non représentée, seules les deux parties d'extrémité 18A, 18C peuvent être mises en oeuvre, comme représenté à la figure 16.

En variante, pour une goulotte de largeur supérieure, également non représentée, une ou plusieurs parties intermédiaires 18B supplémentaires peuvent être mises en oeuvre, à la manière de rallonges.

La présente invention ne se limite d'ailleurs pas à la forme de réalisation et/ou aux formes de mise en oeuvre représentées, mais englobe toute variante d'exécution de celles-ci.

En particulier, la partie de l'auvent la plus proche du corps que prolonge celui-ci peut être d'un seul tenant avec ce corps si désiré.

## Revendications

1. Support pour appareillage à disposer le long d'une goulotte intervenant en saillie sur une quelconque paroi, du genre comportant, d'une part, un corps (15), qui, destiné à être rapporté sur cette paroi, est apte à former un boîtier pour l'appareillage concerné, et qui, le long de celui de ses côtés par lequel il doit côtoyer la goulotte (12), présente une ouverture (17), et, d'autre part, un auvent (18), qui, s'étendant à compter du corps (15), en correspondance avec l'ouverture (17) de celui-ci, est destiné à recouvrir localement la goulotte (12), **caractérisé en ce que** l'auvent (18) est formé d'au moins deux parties (18A, 18B, 18C) distinctes, qui, échelonnées en longueur sur la largeur de la goulotte (12), interviennent bout à bout l'une par rapport à l'autre, en se joignant l'une l'autre suivant une surface de jonction (25AB, 25BC) sensiblement parallèle à l'ouverture (17) du corps (15).

2. Support suivant la revendication 1, **caractérisé en ce que** l'auvent (18) est formé d'au moins trois parties (18A, 18B, 18C), à savoir deux parties d'extrémité (18A, 18C) et au moins une partie intermédiaire (18B).

3. Support suivant la revendication 2, **caractérisé en ce que**, sur les deux parties d'extrémité (18A, 18C) de l'auvent (18), sont prévus des moyens d'assemblage (37, 37') complémentaires, ces moyens d'assemblage (37, 37') étant d'un premier type (37) sur l'une de ces parties d'extrémité (18A, 18C), et d'un deuxième type (37') sur l'autre de celles-ci.

4. Support suivant la revendication 3, **caractérisé en ce que** la partie intermédiaire (18B) comporte, d'un côté, des moyens d'assemblage du premier type (37), et, de l'autre côté, des moyens d'assemblage du deuxième type (37').

5. Support suivant l'une quelconque des revendications 3, 4, **caractérisé en ce que** les moyens d'assemblage du premier type (37) comportent au moins un élément d'emboîtement mâle (38), et les moyens d'assemblage du deuxième type (37') comportent, en correspondance, au moins un élément d'emboîtement femelle (38').

6. Support suivant l'une quelconque des revendications 3 à 5, **caractérisé en ce que** les moyens d'assemblage (37, 37') interviennent sensiblement parallèlement à l'épaisseur des parties (18A, 18B, 18C) concernées de l'auvent (18).

7. Support suivant l'une quelconque des revendications 1 à 6, **caractérisé en ce que** deux au moins des parties (18A, 18B, 18C) de l'auvent (18) à abouter l'une à l'autre comportent, sur une portion au moins du contour de la surface de jonction (25AB, 25BC) correspondante, des moyens d'engagement (43).

8. Support suivant la revendication 7, **caractérisé en ce que** les moyens d'engagement (43) comportent, sur l'une des parties (18A, 18B, 18C) concernées, une feuillure (45), et, sur l'autre de ces parties (18A, 18B, 18C), une languette (46) par laquelle celle-ci est en prise avec la feuillure (45) de la partie (18A, 18B, 18C) précédente.

9. Support suivant la revendication 8, **caractérisé en ce que** la languette (46) est directement formée par la tranche de la partie (18A, 18B, 18C) concernée.

10. Support suivant les revendications 3 et 7, prises conjointement, **caractérisé en ce que** les moyens d'assemblage (37, 37') alternent avec les moyens d'engagement (43).

11. Support suivant la revendication 10, **caractérisé en ce que** les moyens d'assemblage (37, 37') s'étendent le long des ailes latérales (27) des parties (18A, 18B) concernées et les moyens d'engagement (43) le long de leur portion médiane (26).

12. Support suivant l'une quelconque des revendications 1 à 11, **caractérisé en ce que** la partie (18A) de l'auvent (18) la plus proche du corps (15) forme une pièce distincte de celui-ci.

13. Support suivant la revendication 12, **caractérisé en ce que**, entre le corps (15) et la partie (18A) concernée de l'auvent (18), interviennent des moyens de positionnement (30).

14. Support suivant la revendication 13, **caractérisé en ce que** les moyens de positionnement (30) comportent, sur le corps (15), deux rainures (31), qui longent, chacune respectivement, les deux bords latéraux de son ouverture (17), et, en correspondance, sur la partie (18A) concernée de l'auvent (18), deux nervures (32), par lesquelles cette partie (18A) est en prise avec les rainures (31) du corps (15).

15. Support suivant l'une quelconque des revendications 12 à 14, **caractérisé en ce que**, à la partie (18A) de l'auvent (18) la plus proche du corps (15), est associée une barrette (57), apte à se superposer à cette partie (18A) entre les nervures (32) de celle-ci.

16. Support suivant l'une quelconque des revendications 1 à 15, **caractérisé en ce que** la partie (18C) de l'auvent (18) la plus éloignée du corps (15) comporte, en saillie, sur sa surface inférieure, des moyens d'encliquetage (50) par lesquels elle est apte à se crocheter sur le socle (13) de la goulotte (12) concernée.

17. Support suivant l'une quelconque des revendications 1 à 16, **caractérisée en ce que** le corps (15) comporte une platine (20), par laquelle il est adapté à être assujetti à la paroi à équiper, un capot (21), qui comporte son ouverture (17), et une plaque de façade (22), qui forme couvercle.

## Claims

1. Support for equipment to be disposed along trunking projecting from a wall, said support including a body (15) adapted to be attached to said wall and to form a casing for said equipment and which has an opening (17) along its side intended to adjoin the trunking (12) and a trunking cover portion (18) extending from the body (15), in corresponding relationship to the opening (17) thereof, adapted to cover the trunking (12) locally, **characterised in that** the trunking cover portion (18) is formed of at least two separate parts (18A, 18B, 18C) staggered lengthwise across the width of the trunking (12), disposed end-to-end relative to each other and joining to each other at a junction surface (25AB, 25BC) substantially parallel to the opening (17) of the body (15).

2. Support according to claim 1 , **characterised in that** the trunking cover portion (18) is formed of at least three parts (18A, 18B, 18C), namely two end parts (18A, 18C) and at least one intermediate part (18B).

3. Support according to claim 2, **characterised in that** complementary assembly means (37, 37') are provided on the two end parts (18A, 18C) of the trunking cover portion (18), said assembly means (37, 37') being of a first type (37) on one of said end parts (18A, 18C) and of a second type (37') on the other one.

4. Support according to claim 3 , **characterised in that** the intermediate part (18B) has assembly means of the first type (37) at one end and assembly means of the second type (37') at the other end.

5. Support according to either of claims 3 and 4, **characterised in that** the assembly means of the first type (37) include at least one male nesting member (38) and the assembly means of the second type (37') include at least one female nesting member (38') in corresponding relationship thereto.

6. Support according to any one of claims 3 to 5, **characterised in that** the assembly means (37, 37') are substantially parallel to the thickness of said parts (18A, 18B, 18C) of the trunking cover portion (18).

7. Support according to any of claims 1 to 6, **characterised in that** at least two of the parts (18A, 18B, 18C) of the trunking cover portion (18) adapted to be butt jointed include engagement means (43) on at least a portion of the contour of the corresponding junction surface (25AB, 25BC).

8. Support according to claim 7 , **characterised in that** the engagement means (43) include a rebate (45) on one of the parts (18A, 18B, 18C) and a tongue (46) on the other of said parts (18A, 18B, 18C) adapted to interengage with the rebate (45) on the first mentioned part (18A, 18B, 18C).

9. Support according to claim 8 , **characterised in that** the tongue (46) is formed directly by the edge of the part (18A, 18B, 18C) concerned.

10. Support according to claims 3 and 7 in combination, **characterised in that** the assembly means (37, 37') alternate with the engagement means (43).

11. Support according to claim 10 , **characterised in that** the assembly means (37, 37') extend along lateral flanges (27) of the parts (18A, 18B) concerned and the engagement means (43) extend along their middle part (26).

12. Support according to any one of claims 1 to 11, **characterised in that** the part (18A) of the trunking cover portion (18) nearest the body (15) is separate therefrom.

13. Support according to claim 12, **characterised in that** it includes positioning means (30) operative between the body (15) and the part (18A) concerned of the trunking cover portion (18).

14. Support according to claim 13, **characterised in that** the positioning means (30) include two grooves (31) on the body (15) extending along respective lateral edges of its opening (17) and two ribs (32) in corresponding relationship thereto on the part (18A) concerned of the trunking cover portion (18) adapted to be interengaged with the grooves (31) on the body (15).

15. Support according to any one of claims 12 to 14, **characterised in that** a strip (57) associated with the part (18A) of the trunking cover portion (18) nearest the body (15) is adapted to overlie said part (18A) between the ribs (32) thereof.

16. Support according to any one of claims 1 to 15, **characterised in that** the part (18C) of the trunking cover portion (18) at the greatest distance from the body (15) has clipping means (50) projecting from its bottom surface adapted to hook over the base section (13) of the trunking (12) concerned.

17. Support according to any one of claims 1 to 16, **characterised in that** the body (15) includes a plate (20) adapted to be attached to the wall to be equipped, a cap (21) which incorporates its opening (17) and a front plate (22) which forms a cover.

## Patentansprüche

1. Träger für Installationsgeräte, der entlang eines an einer beliebigen Wand vorstehenden Kabelkanals angeordnet werden soll, der Art mit einerseits einem Körper (15), der, dazu bestimmt, an dieser Wand angesetzt zu werden, ein Gehäuse für die betreffenden Installationsgeräte zu bilden vermag, und der längs der Seite, mit der er am Kabelkanal (12) verläuft, eine Öffnung (17) aufweist, und andererseits einer Überdachung (18), die vom Körper (15) aus verlaufend in Übereinstimmung mit dessen Öffnung (17) dazu bestimmt ist, den Kabelkanal (12) lokal abzudecken,
**dadurch gekennzeichnet, dass** die Überdachung (18) aus wenigstens zwei getrennten Teilen (18A, 18B, 18C) gebildet ist, die in der Länge über die Breite des Kabelkanals abgestuft bezüglich einander Stoß an Stoß angeordnet sind, wobei sie entlang einer Verbindungsfläche (25AB, 25BC), die zur Öffnung (17) des Körpers (15) im Wesentlichen parallel ist, miteinander verbunden sind.

2. Träger nach Anspruch 1,
**dadurch gekennzeichnet, dass** die Überdachung (18) aus wenigstens drei Teilen (18A, 18B, 18C) gebildet ist, nämlich zwei äußeren Teilen (18A, 18C) und wenigstens einem mittleren Teil (18B).

3. Träger nach Anspruch 2,
**dadurch gekennzeichnet, dass** an den beiden äußeren Teilen (18A, 18C) der Überdachung (18) komplementäre Montagemittel (37, 37') vorgesehen sind, wobei diese Montagemittel (37, 37') auf dem einen der äußeren Teile (18A, 18C) von einem ersten Typ (37) und auf dem anderen von einem zweiten Typ (37') sind.

4. Träger nach Anspruch 3,
**dadurch gekennzeichnet, dass** das mittlere Teil (18B) auf der einen Seite Montagemittel des ersten Typs (37) und auf der anderen Seite Montagemittel des zweiten Typs (37') aufweist.

5. Träger nach einem der Ansprüche 3, 4,
**dadurch gekennzeichnet, dass** die Montagemittel des ersten Typs (37) wenigstens ein Steckverbindungselement (38) und die Montagemittel des zweiten Typs (37') in Übereinstimmung damit wenigstens ein Nutverbindungselement (38') aufweisen.

6. Träger nach einem der Ansprüche 3 bis 5,
**dadurch gekennzeichnet, dass** die Montagemittel (37, 37') im Wesentlichen parallel zur Dicke der betreffenden Teile (18A, 18B, 18C) der Überdachung (18) angeordnet sind.

7. Träger nach einem der Ansprüche 1 bis 6,
**dadurch gekennzeichnet, dass** wenigstens zwei der miteinander zu verbindenden Teile (18A, 18B, 18C) der Überdachung (18) in wenigstens einem Abschnitt des Umfangs der entsprechenden Verbindungsfläche (25AB, 25BC) Eingriffsmittel (43) aufweisen.

8. Träger nach Anspruch 7,
**dadurch gekennzeichnet, dass** die Eingriffsmittel (43) auf einem der betreffenden Teile (18A, 18B, 18C) einen Falz (45) und auf dem anderen Teil (18A, 18B, 18C) eine Zunge (46) aufweisen, durch die dieses mit dem Falz (45) des vorangehenden Teils (18A, 18B, 18C) in Eingriff ist.

9. Träger nach Anspruch 8,
**dadurch gekennzeichnet, dass** die Zunge (46) direkt durch den Rand des betreffenden Teils (18A, 18B, 18C) gebildet ist.

10. Träger nach den Ansprüchen 3 und 7 in Verbindung miteinander,
**dadurch gekennzeichnet, dass** die Montagemittel (37, 37') und die Eingriffsmittel (43) im Wechsel aufeinanderfolgen.

11. Träger nach Anspruch 10,
**dadurch gekennzeichnet, dass** die Montagemittel (37, 37') längs der Seitenflügel (27) der betreffenden Teile (18A, 18B) verlaufen und die Eingriffsmittel (43) entlang deren Mittelstück (26).

12. Träger nach einem der Ansprüche 1 bis 11,
**dadurch gekennzeichnet, dass** das Teil (18A) der Überdachung (18), das dem Körper (15) am nächsten liegt, ein von diesem getrenntes Teil bildet.

13. Träger nach Anspruch 12,
**dadurch gekennzeichnet, dass** zwischen dem Körper (15) und dem betreffenden Teil (18A) der Überdachung (18) Positionierungsmittel (30) angeordnet sind.

14. Träger nach Anspruch 13,
**dadurch gekennzeichnet, dass** die Positionierungsmittel (30) auf dem Körper (15) zwei Nuten (31) aufweisen, die jeweils an den beiden Seitenrändern von dessen Öffnung (17) entlanglaufen, sowie in Übereinstimmung dazu auf dem betreffenden Teil (18A) der Überdachung (18) zwei Rippen (32) aufweisen, durch die das Teil (18A) mit den Nuten (31) des Körpers (15) in Eingriff ist.

15. Träger nach einem der Ansprüche 12 bis 14,
**dadurch gekennzeichnet, dass** dem Teil (18A) der Überdachung (18), das dem Körper (15) am nächsten liegt, ein Steg (57) zugeordnet ist, der diesem Teil (18A) zwischen dessen Rippen (32) angefügt zu werden vermag.

16. Träger nach einem der Ansprüche 1 bis 15,
**dadurch gekennzeichnet, dass** das Teil (18C) der Überdachung (18), das vom Körper (15) am weitesten entfernt ist, an seiner Unterseite vorspringend Rastmittel (50) aufweist, durch die es diesem möglich ist, sich an dem Sockel (13) des betreffenden Kabelkanals (12) einzuhaken.

17. Träger nach einem der Ansprüche 1 bis 16,
**dadurch gekennzeichnet, dass** der Körper (15) eine Platte (20), mit der dieser an der auszurüstenden Wand befestigt zu werden vermag, eine Haube (21), die mit dessen Öffnung (17) versehen ist, und eine einen Deckel bildende Frontplatte (22) aufweist.
